# EUROPÄISCHE PATENTSCHRIFT

(11) **EP 3 301 118 B1**
(45) Veröffentlichungstag und Bekanntmachung des Hinweises auf die Patenterteilung: **10.07.2019**
(21) Anmeldenummer: 17182028.5
(22) Anmeldetag: 19.07.2017
(51) Int. Cl.: C08C 19/25, B60C 1/00, C08K 3/36, C08L 7/00, C08L 9/00, C08L 9/06

(54) **SCHWEFELVERNETZBARE KAUTSCHUKMISCHUNG, VULKANISAT DER KAUTSCHUKMISCHUNG UND FAHRZEUGREIFEN**
SULPHUR-LINKABLE RUBBER COMPOUND, VULCANIZATE OF THE RUBBER COMPOUND AND VEHICLE TYRES
MÉLANGE DE CAOUTCHOUC RÉTICULABLE AU SOUFRE, VULCANISATION DE MÉLANGE DE CAOUTCHOUC ET PNEUMATIQUE POUR VÉHICULE

(30) Priorität: 29.09.2016 DE 102016218870
(43) Veröffentlichungstag der Anmeldung: 04.04.2018
(73) Patentinhaber: Continental Reifen Deutschland GmbH, 30165 Hannover (DE)
(72) Erfinder: Müller, Norbert, 29336 Nienhagen (DE); Pavon Sierra, Viktoria, 30419 Hannover (DE)
(74) Vertreter: Finger, Karsten

(56) Entgegenhaltungen:
- EP-A1- 1 925 636
- EP-A1- 2 065 221
- EP-A1- 2 743 301
- EP-A1- 2 778 184
- EP-A1- 2 987 813
- WO-A1-2012/084360
- US-A- 4 218 349
- US-A1- 2009 239 974

## Beschreibung

Die Erfindung betrifft eine schwefelvernetzbare Kautschukmischung, insbesondere für Fahrzeugreifen, ein Vulkanisat der Kautschukmischung und einen Fahrzeugreifen.

Da die Fahreigenschaften eines Fahrzeugreifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Nassgriffs und des Trockenbremsens weiterhin in der Regel eine Verschlechterung des Rollwiderstandes, der Wintereigenschaften und des Abriebverhaltens nach sich.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Aus der EP 1052270 A sind z. B. Laufstreifenmischungen auf Basis von Ruß als Füllstoff bekannt, die für einen guten Griff auf Eis unter anderem ein flüssiges Polymer, z. B. Polybutadien, enthalten.

Aus der DE 3804908 A1 sind ebenfalls Laufstreifenmischungen auf Basis von Ruß als Füllstoff bekannt, die für gute Wintereigenschaften flüssiges Polybutadien enthalten. Flüssiges Polybutadien mit hohem Vinylgehalt und einer hohen Glasübergangstemperatur (T_{g}) wird in der EP 1035164 A für Reifenlaufstreifen als Ersatz für herkömmliche Weichmacheröle vorgeschlagen.

Die Verwendung von flüssigem Polybutadien in herkömmlichen Mischungen wirkt sich allerdings sehr negativ auf das Trockenbremsen und Trockenhandling von Reifen aus.

Die DE 102008058996 A1 und die DE102008058991 A1 offenbaren als Ersatz für übliche Weichmacheröle endständig amin-modifizierte flüssige Polybutadiene bzw. carboxylendständig modifizierte flüssige Polybutadiene in Laufstreifenmischungen mit einer hohen Menge an Synthesekautschuk. Die Reifen sollen sich durch eine sehr gute Ausgewogenheit zwischen niedrigem Kraftstoffverbrauch und guten Hafteigenschaften und die Fähigkeit zur Unterdrückung der Rissbildung am Boden von Profilrillen unter gleichzeitiger Wahrung der Verschleiß festigkeit auszeichnen.

Die EP 2060604 B1 offenbart eine Kautschukmischung enthaltend ein funktionalisiertes Polymer mit einem Mw von 20000 g/mol sowie Ruß als Füllstoff in Kombination mit 60 phr Naturkautschuk.
In der US 20020082333 A1 wird zur Verbesserung der Prozessierbarkeit ein mit Triethoxysilan modifiziertes Polybutadien anstelle eines Silans in einer NR-freien Kautschukmischung auf Basis von Synthesekautschuk und Kieselsäure als Füllstoff eingesetzt.

Allerdings ist eine Kautschukmischung enthaltend ein modifiziertes Polymer und Kieselsäure als Füllstoff aufgrund der hohen auftretenden Viskositäten vergleichsweise schlecht prozessierbar, insbesondere ist die Extrusion der Mischung zu Bauteilen von Fahrzeugreifen, wie insbesondere Laufstreifen, extrem erschwert.

Der Erfindung liegt daher nun auf Basis des Standes der Technik die Aufgabe zu Grunde, eine schwefelvernetzbare Kautschukmischung, insbesondere für Fahrzeugreifen, bereitzustellen, die sich durch optimale Eigenschaften im Zielkonflikt aus Rollwiderstandsverhalten, Nassbremsverhalten und Abriebresistenz auszeichnet, und zudem besser verarbeitet werden kann. Insbesondere soll die Extrudierbarkeit verbessert werden.

Gelöst wird diese Aufgabe durch eine Kautschukmischung, die wenigstens die folgenden Bestandteile enthält:
- 100 phr wenigstens eines festen Dienkautschuks, welcher ein Gewichtsmittel Mw des Molekulargewichts gemäß GPC von 250.000 bis 5.000.000 g/mol aufweist, und
- 3 bis 40 phr wenigstens eines flüssigen Polymers A, welches endständig organosilicium-modifiziert ist, und ein Gewichtsmittel Mw des Molekulargewichts gemäß GPC von 500 bis 7800 g/mol aufweist, und
- 3 bis 40 phr wenigstens eines unmodifizierten flüssigen Polymers B, welches ein Gewichtsmittel Mw des Molekulargewichts gemäß GPC von 500 bis 50000 g/mol aufweist, und
- wenigstens eine Kieselsäure.

Überraschenderweise wurde gefunden, dass durch die Kombination eines flüssigen modifizierten Polymers A mit einem flüssigen unmodifiziertem Polymer B die Viskosität unerwartet stark herabgesetzt wird, sodass die Kautschukmischung eine überraschend gute Extrudierbarkeit aufweist. Die genannten Polymere A und B wirken dabei auf eine synergistische Weise zusammen.
Gleichzeitig verbleiben die übrigen Reifeneigenschaften auf einem annähernd gleich hohen Niveau oder werden sogar verbessert.
In der erfindungsgemäßen Kautschukmischung ist es somit möglich, ein optimales Niveau im Zielkonflikt aus Rollwiderstandsverhalten, Nassbremsverhalten und Abriebresistenz zu erzielen, ohne dass Schwierigkeiten bei der Herstellung in Kauf genommen werden müssen.

Eine weitere Aufgabe, die der vorliegenden Erfindung zugrunde liegt, besteht darin einen Fahrzeugreifen bereitzustellen, der ein optimales Niveau im Zielkonflikt aus Rollwiderstandsverhalten, Nassbremsverhalten und Abriebresistenz aufweist, und gleichzeitig auf einfachere Weise hergestellt werden kann.

Gelöst wird die Aufgabe dadurch, dass der Fahrzeugreifen wenigstens in einem Bauteil wenigstens ein Vulkanisat wenigstens einer schwefelvernetzbaren Kautschukmischung mit oben genannten bzw. unten näher ausgeführten Merkmalen aufweist. Bevorzugt weist der Fahrzeugreifen die Kautschukmischung we-nigstens im Laufstreifen auf, und hierbei bevorzugt in der Cap im Falle eines Laufstreifens mit einer Cap/Base-Konstruktion. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap).
Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).
Fahrzeugreifen, die die erfindungsgemäße Kautschukmischung wenigstens im Laufstreifen enthalten, weisen optimale Eigenschaften hinsichtlich Rollwiderstand, Nassbremsen und Abrieb auf, wobei der Reifen auf einfachere und verbesserte Weise hergestellt ist.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.
Die erfindungsgemäße Kautschukmischung ist ferner auch für andere Bauteile von Fahrzeugreifen geeignet, wie z. B. insbesondere Seitenwand, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat aus der erfindungsgemäßen Kautschukmischung und den erfindungsgemäßen Fahrzeugreifen, der die erfindungsgemäße Kautschukmischung wenigstens in einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen. Die erfindungsgemäß enthaltenen flüssigen Polymere (mit den angegebenen Mw) gehen daher her nicht als Kautschuke in die hundert Teile der phr-Berechnung ein.

Die Bestimmung des Gewichtsmittels Mw und des Zahlenmittels Mn des Molekulargewichtes der Polymere erfolgt mittels Gelper-meationschromatographie (GPC mit Tetrahydrofuran (THF) als Elutionsmittel bei 40 °C, Apparat PPS, kalibriert mit Polystyrol-Standard; Größenausschlußchromatographie; engl. SEC = size exclusion chromatography in Anlehnung an BS ISO 11344:2004).
Im Rahmen der vorliegenden Erfindung wird die Abkürzung Mw für das Gewichtsmittel des Molekulargewichts verwendet.

Erfindungsgemäß enthält die Kautschukmischung 100 phr wenigstens eines festen Kautschuks, welcher ein Gewichtsmittel Mw des Molekulargewichts gemäß GPC von 250.000 bis 5.000.000 g/mol aufweist.
Unter "fester Kautschuk" ist dabei ein Kautschuk mit einem Gewichtsmittel Mw des Molekulargewichts gemäß GPC von 250.000 bis 5.000.000 g/mol zu verstehen.

Der feste Kautschuk ist dabei bevorzugt ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk und/oder Halobutylkautschuk und/oder Polynorbornen und/oder Isopren-Isobutylen-Copolymer und/oder Ethylen-Propylen-Dien-Kautschuk und/oder Nitrilkautschuk und/oder Chloroprenkautschuk und/oder Acrylat-Kautschuk und/oder Fluorkautschuk und/oder Silikon-Kautschuk und/oder Polysulfidkautschuk und/oder Epichlorhydrinkautschuk und/oder Styrol-Isopren-Butadien-Terpolymer und/oder hydrierter Acrylnitrilbutadienkautschuk und/oder Isopren-Butadien-Copolymer und/oder hydrierter Styrol-Butadien-Kautschuk.
Insbesondere Nitrilkautschuk, hydrierter Acrylnitrilbutadienkautschuk, Chloroprenkautschuk, Butylkautschuk, Halobutylkautschuk oder Ethyl-en-Propylen-DienKautschuk kommen bei der Herstellung von technischen Gummiartikeln, wie Gurte, Riemen und Schläuche, und/oder Schuhsohlen zum Einsatz.

Bevorzugt umfasst der wenigstens eine feste Kautschuk wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bevorzugt ist der Dienkautschuk ausgewählt aus der Gruppe bestehend aus synthetischem Polyisopren (IR) und natürlichem Polyisopren (NR) und Styrol-Butadien-Kautschuk (SBR) und Polybutadien (BR).

Bei dem natürlichen und/oder synthetischen Polyisopren sämtlicher Ausführungsformen kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren, der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisopren(en) denkbar.

Bei dem Butadien-Kautschuk (= BR, Polybutadien), kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt.
Das oder die eingesetzte(n) Butadienkautschuke (festen Polybutadiene) kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen und/oder Alkoxysilan-Gruppe und einem primären Amin und/oder Alkoxysilan-Gruppen und einem Thiol handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim festen Polybutadien genannten Modifizierungen und Funktionalisierungen endgruppenmodifiziert und/oder entlang der Polymerketten funktionalisiert sein.
Besonders bevorzugt ist das oder die eingesetzte(n) Sty-rol-Butadien-Copolymere mit einer funktionellen Gruppe funktionalisiert, die an Kieselsäure anbinden kann, womit das oder die eingesetzte(n) Styrol-Butadien-Copolymere "für Kieselsäure funktionalisiert sind".
Bevorzugt handelt es sich hierbei um eine funktionelle Gruppe ausgewählt aus der Gruppe bestehend aus Hydroxy-Gruppe und/oder Ethoxy-Gruppe und/oder Epoxy-Gruppe und/oder Siloxan-Gruppe und/oder Aminosiloxan und/oder Carboxy-Gruppe und/oder Silan-Sulfid-Gruppe und/oder Alkoxysilan-Gruppe und einem primären Amin und/oder einer Alkoxysilan-Gruppe und einem Thiol.

Gemäß einer bevorzugten Ausführungsform der Erfindung weisen der oder die in der erfindungsgemäßen Kautschukmischung enthaltenen Kautschuk(e), also das oder die beschriebene(n) feste(n) Kautschuke eine Gesamtglasübergangstemperatur gemäß DSC von niedriger als -40 °C, bevorzugt -41 °C bis -120 °C, auf. Mit einem Blend des oder der enthaltenen festen Kautschuke mit einer Gesamtglasübergangstemperatur von niedriger als -40 °C werden insbesondere verbesserte Abriebeigenschaften erzielt.
Die Bestimmung der Gesamtglasübergangstemperatur der festen Kautschuke erfolgt gemäß DSC (Apparat Mettler Toledo; Messung von +70 °C bis -150 °C, Temperaturänderung von 10 K/min; Bestimmung des Glasübergangspunktes analog ISO-FDIS 11357-2).

Gemäß einer bevorzugten Ausführungsform der Erfindung enthält die Kautschukmischung 40 bis 80 phr wenigstens eines Styrol-Butadien-Kautschuks, 5 bis 20 phr wenigstens eines Naturkautschuks und 10 bis 30 phr wenigstens eines Butadienkautschuks.

Erfindungswesentlich enthält die schwefelvernetzbare Kautschukmischung wenigstens ein flüssiges Polymer A, welches endständig organosilicium-modifiziert ist und ein Gewichtsmittel Mw des Molekulargewichts gemäß GPC von 500 bis 7800 g/mol aufweist. Hierbei beinhaltet der Wertebereich des Mw, dass es sich bei Raumtemperatur um ein flüssiges Polymer handelt. Der Einfachheit halber wird deshalb im Rahmen der vorliegenden Erfindung auch der kurze Ausdruck "flüssiges Polymer" verwendet.
Die Angabe des Mw bezieht sich hierbei auf das Polymer inklusive der Organosilicium-Modifizierung.

Gemäß einer besonders bevorzugten Ausführungsform der Erfindung ist das flüssige Polymer A ein Homo- oder Copolymer wenigstens eines konjugierten Diens.
Das wenigstens eine konjugierte Dien kann jedes dem Fachmann bekannte konjugierte Dien sein. Bevorzugt ist das konjugierte Dien ausgewählt aus der Gruppe enthaltend 1,3-Butadien und/oder 2-(C₁-C₅-Alkyl)-1,3-Butadien und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien.
Es ist denkbar, dass eines oder zwei oder mehr der genannten konjugierten Diene im Gemisch miteinander verwendet wurden.
Ein Beispiel für ein 2-(C₁-C₅-Alkyl)-1,3-Butadien ist Isopren (2-Methyl-1,3-Butadien). Besonders bevorzugt ist das konjugierte Dien ausgewählt aus der Gruppe bestehend aus 1,3-Butadien und/oder Isopren und/oder 2,3-Dimethyl-1,3-Butadien und/oder 1,3-Pentadien und/oder 2,4-Hexadien und/oder 1,3-Hexadien und/oder 1,3-Heptadien und/oder 1,3-Octadien und/oder 2-Methyl-2,4-Pentadien und/oder Cyclopentadien und/oder 2,4-Hexadien und/oder 1,3-Cyclooctadien.
Ganz besonders bevorzugt handelt es sich bei dem wenigstens einen konjugierten Dien um Isopren und/oder 1,3-Butadien.

Gemäß einer bevorzugten Ausführungsform der Erfindung ist das konjugierte Dien des flüssigen Polymers A 1,3-Butadien.

Das Polymer A kann auch ein Copolymer wenigstens eines konjugierten Diens mit wenigstens einer vinylaromatischen Verbindung sein.

Der Begriff "vinylaromatische Verbindung" umfasst im Rahmen der vorliegenden Erfindung monovinylaromatische Verbindungen, d.h. Verbindungen, bei denen nur eine Vinylgruppe an eine aromatische Gruppe gebunden ist, sowie vinylaromatische Verbindungen, bei denen zwei oder mehr Vinylgruppen an eine aromatische Gruppe gebunden sind.
Als vinylaromatische Verbindung ist jede dem Fachmann bekannte denkbar. Bevorzugt ist die vinylaromatische Verbindung ausgewählt aus der Gruppe enthaltend Styrol und/oder C₁₋₄-Alkylsubstituierte Styrole und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder divinylaromatische Verbindungen.
Bei den C₁₋₄-Alkylsubstituierten Styrolen kann es sich beispielsweise um 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol handeln.
Bei den divinylaromatische Verbindungen kann es sich beispielsweise um 1,2-Divinylbenzol und/oder 1,3-Divinylbenzol und/oder 1,4-Divinylbenzol handeln.
Es ist denkbar, dass eine oder zwei oder mehr vinylaromatische Verbindungen im Gemisch miteinander verwendet wurden.

Bevorzugt ist die vinylaromatische Verbindung ausgewählt aus der Gruppe bestehend aus Styrol und/oder 2-Methylstyrol und/oder 3-Methylstyrol und/oder 4-Methylstyrol und/oder 2,4-Dimethylstyrol und/oder 2,4,6-Trimethylstyrol und/oder alpha-Methylstyrol und/oder 2,4-Diisopropylstyrol und/oder 4-tert-Butylstyrol und/oder Stilben und/oder Vinylbenzyldimethylamin und/oder (4-Vinylbenzyl)Dimethylaminoethylether und/oder N,N-Dimethylaminoetyhlstyrol und/oder tert-Butoxystyrol und/oder Vinylpyridin und/oder 1,2-Divinylbenzol und/oder 1,3-Divinylbenzol und/oder 1,4-Divinylbenzol.

Gemäß einer bevorzugten Weiterbildung der Erfindung basiert das Polymer A auf der Polymerisation von 1,3-Butadien ohne weitere konjugierte Diene und ohne eine vinylaromatische Verbindung, und stellt damit Ketten von Polybutadien (BR) dar.

Das Polymer A ist somit in einer besonders bevorzugten Ausführungsform ein Polybutadien. Hiermit ergeben sich besonders gute Eigenschaften hinsichtlich der Zielkonflikte aus Rollwiderstand, Nassgriff und Abriebresistenz.

Bevorzugt ist das flüssige Polymer A mit zumindest einem Rest gemäß Formel I) modifiziert:

I) (R¹R²R³)Si-

wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polymers angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

Mit einer derartigen Modifizierung ergeben sich besonders gute Rollwiderstandsindikatoren.

Gemäß einer bevorzugten Ausführungsform der Erfindung sind alle Gruppen R¹, R², R³ Alkoxygruppen. Besonders bevorzugt ist wenigstens eine der drei Gruppen R¹, R², R³ eine Ethoxygruppe. Ganz besonders bevorzugt handelt es sich bei allen drei Gruppen R¹, R², R³ um jeweils eine Ethoxygruppe (abgekürzt mit OEt). Dies gilt für alle genannten Ausführungsformen der Erfindung inkl. den Formeln II) und III).

Gemäß einer bevorzugten Ausführungsform der Erfindung ist der Rest gemäß Formel I) nicht direkt, sondern über eine Brücke angebunden. Bevorzugt ist damit ein Rest inkl. Brücke gemäß Formel II) an die Polymerkette des Polymers angebunden.

II) (R¹R²R³)Si-Y-X-

wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester, ist. Hierbei ist Y-X- die Brücke und ((R¹R²R³))Si- der Molekülteil, der auch schon in Formel I) vorhanden ist.

Unter Urethan wird im Rahmen der vorliegenden Erfindung eine Gruppierung -N(H)-C(O)-O- verstanden.

Gemäß einer besonders vorteilhaften Ausführungsform der Erfindung ist das flüssige Polymer mit einem Rest gemäß Formel II) modifiziert, bei dem X = Propyl (n = 3) und Y = Urethan (-N(H)-C(O)-O-) und die Reste R¹, R² und R³ alle eine Ethoxygruppe (OEt) sind.

Wie bereits ausgeführt, ist das Polymer A bevorzugt ein Polybutadien. Hiermit ergibt sich als besonders bevorzugte Strukturformel des organosiliciummodifizierten flüssigen Polymers die Formel III)

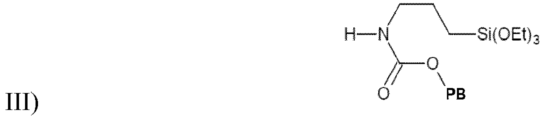

Hierbei ist PB = Polybutadien und stellt damit die Polymerkette der Monomere dar.

Das flüssige Polymer A, bevorzugt Polybutadien, weist ein Mw von 500 bis 7800 g/mol auf. Hiermit ergeben sich sehr gute Eigenschaften hinsichtlich des Rollwiderstandes sowie der Verarbeitbarkeit, da Mw kleiner oder gleich 7800 eine Flüssigdosierung aufgrund der niedrigen Viskositäten erlauben.
Besonders bevorzugt weist das flüssige Polymer, bevorzugt Polybutadien, ein Mw von 1000 bis 7800 g/mol auf. Hiermit ergeben sich wiederum besonders gute Eigenschaften hinsichtlich des Rollwiderstandes sowie der Verarbeitbarkeit.

Das flüssige Polymer, bevorzugt Polybutadien, weist bevorzugt eine Glasübergangstemperatur Tg gemäß DSC (Apparat Mettler Toledo; Messung von +70 °C bis -150 °C, Temperaturänderung von 10 K/min; Bestimmung des Glasübergangspunktes analog ISO-FDIS 11357-2) von -85 bis -30 °C, besonders bevorzugt -60 bis -40 °C auf.
Hiermit ergeben sich besonders gute Rollwiderstandsindikatoren.

Handelt es sich um flüssiges Polybutadien, so weist dies bevorzugt einen Vinyl-Gehalt (Gehalt an 1,2-gebundenem Butadien, bezogen auf die Monomere der Polymerkette des Polybutadiens) von 40 bis 75 % auf, besonders bevorzugt 50 bis 75 %, ganz besonders bevorzugt 55 bis 70 %.

Das flüssige Polybutadien weist ferner bevorzugt einen 1,4-trans-Anteil von 5 bis 30 % (bezogen auf die Monomere der Polymerkette des Polybutadiens), besonders bevorzugt von 10 bis 25 %, auf.
Der cis-Anteil des flüssigen Polybutadiens beträgt bevorzugt 5 bis 30 % (bezogen auf die Monomere der Polymerkette des Polybutadiens), besonders bevorzugt 10 bis 25 %.
Die Merkmale der Mikrostruktur wie 1,4-trans-Anteil, Vinyl-Gehalt, cis-Anteil werden nach erfolgter Synthese des flüssigen Polybutadiens (s. unten) mittels ¹³C-NMR (90,5628 MHz; Relaxationsagens Cr(acac)₃; Lösungsmittel CDCl₃, Bruker 360 MHz) bestimmt.

Das flüssige Polybutadien gemäß Formel III) kann beispielsweise durch Reaktion von 3-Isocyant-n-Propyl-Triethoxysilan mit endständig Hydroxy-funktionalisiertem Polybutadien (z.B. Krasol LBH-P3000) wie in der US 2002/0082333 A1 beschrieben hergestellt werden.

Die Menge des flüssigen Polymers A beträgt 3 bis 40 phr, bevorzugt 3 bis 20 phr, besonders bevorzugt 5 bis 15 phr.
Insbesondere mit einer Menge von 3 bis 20 phr, besonders bevorzugt 5 bis 15 phr, wird die Aufgabe der Verbesserung der Extrudierbarkeit bei optimalen Reifeneigenschaften besonders gut gelöst.

Erfindungsgemäß enthält die Kautschukmischung 3 bis 40 phr wenigstens eines unmodifizierten flüssigen Polymers B, welches ein Gewichtsmittel Mw des Molekulargewichts gemäß GPC von 500 bis 50000 g/mol aufweist.

Hierbei beinhaltet der Wertebereich des Mw, dass es sich bei Raumtemperatur um ein flüssiges Polymer handelt. Der Einfachheit halber wird deshalb im Rahmen der vorliegenden Erfindung auch der kurze Ausdruck "flüssiges Polymer" verwendet.

Das Polymer B ist unmodifiziert, das heißt es ist nicht mit einer funktionellen Gruppe modifiziert, d. h. nicht funktionalisiert.
Gemäß einer besonders bevorzugten Ausführungsform der Erfindung ist das flüssige Polymer B ein Homo- oder Copolymer wenigstens eines konjugierten Diens.
Für das wenigstens eine konjugierte Dien gelten beim Polymer B dieselben Ausführungen wie für das Polymer A.

Das Polymer B kann auch ein Copolymer wenigstens eines konjugierten Diens mit wenigstens einer vinylaromatischen Verbindung sein.
Für die wenigstens eine vinylaromatische Verbindung gelten beim Polymer B dieselben Ausführungen wie für das Polymer A.
Gemäß einer bevorzugten Weiterbildung der Erfindung basiert das Polymer B auf der Polymerisation von 1,3-Butadien ohne weitere konjugierte Diene und ohne eine vinylaromatische Verbindung, und stellt damit Ketten von Polybutadien (BR) dar.
Das Polymer B ist somit in einer besonders bevorzugten Ausführungsform ein Polybutadien. Hiermit ergeben sich besonders gute Eigenschaften hinsichtlich der Zielkonflikte aus Rollwiderstand, Nassgriff und Abriebresistenz sowie der Extrudierbarkeit.

Insbesondere durch die Kombination des beschriebenen modifizierten Polymers A, bevorzugt ein Polybutadien, mit dem beschriebenen unmodifiziertem Polymer B, bevorzugt ein Polybutadien, ergibt sich überraschenderweise in der erfindungsgemäßen Kautschukmischung ein synergistischer Effekt hinsichtlich der Viskosität und der Extrudierbarkeit.

Die erfindungsgemäße Kautschukmischung enthält wenigstens eine Kieselsäure. Bevorzugt enthält die Kautschukmischung 20 bis 300 phr, besonders bevorzugt 40 bis 200 phr, zumindest einer Kieselsäure, wobei mit den angegebenen Mengen jeweils die Gesamtmenge aller enthaltenen Kieselsäuren gemeint ist.
Gemäß einer besonders bevorzugten Ausführungsform der Erfindung enthält die Kautschukmischung 70 bis 160 phr, bevorzugt 100 bis 160 phr, besonders bevorzugt 120 bis 130 phr, zumindest einer Kieselsäure.
Die Begriffe "Kieselsäure" und "Silika" werden im Rahmen der vorliegenden Erfindung, wie auch in der Fachwelt üblich, synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 60 bis 260 m²/g, besonders bevorzugt von 120 bis 230 m²/g, und eine CTAB-Oberfläche (gemäß ASTM D 3765) von 30 bis 400 m²/g, bevorzugt von 60 bis 250 m²/g, besonders bevorzugt von 120 bis 230 m²/g, aufweist. Derartige Kieselsäuren führen z. B. in Kautschuk-mischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Solvay), zum Einsatz kommen.

Die erfindungsgemäße Kautschukmischung ist gemäß einer bevorzugten Ausführungsform frei von Ruß, d.h. sie enthält 0 phr Ruß.
Gemäß einer weiteren Ausführungsform der Erfindung kann sie ferner wenigstens einen Ruß in Mengen von 0,1 bis 30 phr, bevorzugt 0,1 bis 20 phr, besonders bevorzugt 0,1 bis 10 phr, enthalten. Falls Ruß enthalten ist, ist eine geringe Menge von 0,1 bis 10 phr zwecks verbesserter Rollwiderstandsindikatoren besonders bevorzugt.

Enthält die Kautschukmischung Ruß, sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 30 bis 130 g/kg, und eine DBP-Zahl gemäß ASTM D 2414 von 80 bis 200 ml/100 g, bevorzugt 100 bis 200 ml/100g, besonders bevorzugt 100 bis 180 ml/100g, aufweist.
Hiermit werden für die Anwendung im Fahrzeugreifen besonders gute Rollwiderstandsindikatoren (Rückprallelastizität bei 70 °C) bei guten sonstigen Reifeneigenschaften erzielt.

Die erfindungsgemäße Kautschukmischung kann neben Kieselsäure und ggf. Ruß noch weitere bekannte polare und/oder unpolare Füllstoffe, wie Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern) oder weitere ggf. verstärkende Füllstoffe.
Weitere ggf. verstärkende Füllstoffe sind z. B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".
Zinkoxid gehört im Rahmen der vorliegenden Erfindung nicht zu den Füllstoffen.

Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Hierbei können ein oder mehrere verschiedene Silan-Kupplungsagenzien in Kombination miteinander eingesetzt werden. Die Kautschukmischung kann somit ein Gemisch verschiedener Silane enthalten. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält.
Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Gemäß einer weiteren bevorzugten Ausführungsform der Erfindung enthält die Kautschukmischung zumindest ein geblocktes und/oder ungeblocktes Mercaptosilan. Unter ungeblockten Mercaptosilanen sind Silane zu verstehen, die eine -S-H-Gruppe aufweisen, also ein Wasserstoffatom am Schwefelatom. Unter geblockten Mercaptosilanen sind Silane zu verstehen, die eine S-SG-Gruppe aufweisen, wobei SG die Abkürzung für eine Schutzgruppe am Schwefelatom ist. Bevorzugte Schutzgruppen sind, wie unten ausgeführt, Acylgruppen.
Der Ausdruck "geblocktes und/oder ungeblocktes Mercaptosilan" bedeutet, dass sowohl ein geblocktes, als auch ein ungeblocktes, als auch ein Gemisch aus geblocktem und ungeblocktem Silan in der erfindungsgemäßen Kautschukmischung enthalten sein kann. Dem Fachmann ist klar, dass sich diese Angabe auf den Anfangszustand der Bestandteile der schwefelvernetzbaren Kautschukmischung bezieht und während des Mischvorgangs und/oder der Vulkanisation die Schutzgruppen abgespalten werden und die jeweiligen Schwefelatome chemisch reagieren.

Bevorzugt weist das geblockte und/oder ungeblockte Mercaptosilan die allgemeine Summenformel X) auf:

X) (R⁷)₃Si-Z-S-R⁸,

wobei die Reste R⁷ innerhalb eines Moleküls gleich oder verschieden voneinander sein können und Alkoxy-Gruppen mit 1 bis 10 Kohlenstoffatomen und/oder Alkylpolyethergruppen der Form -O-((CH₂)ₓ-O-)_{z}R⁹ mit z = 2 bis 9 und x = 2 bis 9 sind, wobei die Reste R⁹ innerhalb eines Moleküls gleich oder verschieden voneinander sein können und Alkylgruppen mit 10 bis 25 Kohlenstoffatomen sind, und
wobei R⁸ eine Acylgruppe mit 1 bis 20 Kohlenstoffatomen oder ein Wasserstoffatom (H) ist, und
wobei Z eine Alkylgruppe mit 1 bis 10 Kohlenstoffatomen ist.
S ist die Abkürzung für Schwefel und Si für Silizium und O für Sauerstoffatom.

Gemäß einer bevorzugten Ausführungsform der Erfindung handelt es sich um wenigstens ein geblocktes Mercaptosilan. Gemäß einer bevorzugten Weiterbildung dieser Ausführungsform der Erfindung enthält die erfindungsgemäße Kautschukmischung kein, d.h. 0 phf, ungeblocktes Mercaptosilan, d.h. in dieser Ausführungsform ist sie frei von ungeblocktem Mercaptosilan.

Geblockte Mercaptosilane tragen an dem Schwefelatom eine Schutzgruppe, in dem vorliegenden Fall in Formel X) die Gruppe R⁸, wodurch sie auch "geschützte Mercaptosilane" genannt werden.
Gemäß einer bevorzugten Ausführungsform des geblockten Mercaptosilans sind alle Gruppen R⁷ Alkoxygruppen. Besonders bevorzugt ist wenigstens eine der drei Gruppen R⁷ eine Ethoxygruppe. Ganz besonders bevorzugt handelt es sich bei allen drei Gruppen R⁷ um jeweils eine Ethoxygruppe (abgekürzt mit OEt).
Gemäß einer bevorzugten Ausführungsform der Erfindung handelt es sich bei dem geblockten Mercaptosilan um 3-Octanoylthio-1-propyltriethoxysilan, womit in oben genannter Formel X) alle Reste R⁴ Ethoxy (OEt) sind und Z eine Propylgruppe ist und R⁸ eine Octanoylgruppe ist.

Überraschenderweise ergibt sich aus der Kombination der oben beschriebenen Polymere A und B mit einem geblockten Mercaptosilan, insbesondere 3-Octanoylthio-1-propyltriethoxysilan, eine besonders gute Verbesserung der Rollwiderstandsindikatoren.

Die Menge der enthaltenen Kupplungsagenzien beträgt bevorzugt 0,1 bis 30 phr, bevorzugt 5 bis 20 phr.

Weiterhin kann die Kautschukmischung weitere Aktivatoren und/oder Agenzien für die Anbindung von Füllstoffen, insbesondere Ruß, enthalten. Hierbei kann es sich beispielsweise um die z. B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Die genannten Silane und Aktivatoren werden bei der Herstellung der Kautschukmischung bevorzugt in wenigstens einer Grundmischstufe zugegeben.

Gemäß einer vorteilhaften Weiterbildung der Erfindung enthält die Kautschukmischung wenigstens ein Kohlenwasserstoffharz.

Bevorzugt enthält die erfindungsgemäße Kautschukmischung 3 phr oder mehr, besonders bevorzugt 10 phr oder mehr, ganz besonders bevorzugt mehr als 25 phr, wiederum ganz besonders bevorzugt 26 bis 100 phr wenigstens eines Kohlenwasserstoffharzes.
Durch eine Menge von mehr als 25 phr, bevorzugt 26 bis 100 phr, wenigstens eines Kohlenwasserstoffharzes ergibt sich insbesondere in Kombination mit den oben genannten Bestandteilen eine besonders gute Prozessierbarkeit der Kautschukmischung, insbesondere hinsichtlich der Extrudate vor der Vernetzung, bei gleichzeitig guten Rollwiderstandsindikatoren und gutem (und damit geringem) Wärmeaufbau und optimalem Nassbrems- und Abriebverhalten.

Insbesondere ergibt sich bei der Kombination von mehr als 25 phr wenigstens eines Kohlenwasserstoffharzes in Kombination mit einer Gesamtglasübergangstemperatur der enthaltenen festen Kautschuke (oder des enthaltenen festen Kautschuks) von niedriger als - 40 °C eine Verbesserung im Abriebverhalten ohne dass das Rollwiderstands- und Nassbremsverhalten negativ beeinträchtigt wird.

Gemäß einer besonders bevorzugten Ausführungsform der Erfindung enthält die Kautschukmischung 26 bis 100 phr, bevorzugt 30 bis 50 phr, wenigstens eines Kohlenwasserstoffharzes.
Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.
Das Kohlenwasserstoffharz kann ein Homopolymer oder ein Copolymer sein. Unter Homopolymer wird in der vorliegenden Anmeldung allgemein ein Polymer verstanden, welches gemäß Römpp Online Version 3.28 "aus Monomeren nur einer Art entstanden ist".

Unter Copolymer wird im Rahmen der vorliegenden Erfindung allgemein ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z. B. auch ein Copolymer aus drei verschiedenen Monomeren sein.

Bei den Monomeren des oder der bevorzugt enthaltenen Kohlenwasserstoffharze(s) kann es sich um alle dem Fachmann bekannten Monomere von Kohlenwasserstoffharzen handeln, wie aliphatische C₅-Monomere, weitere ungesättigte Verbindungen, die kationisch polymerisiert werden können, enthaltend Aromaten und/oder Terpene und/oder Alkene und/oder Cycloalkene.

Bei den Aromaten (aromatische Monomere) kann es sich bei-spielsweise um alpha-Methylstyrol und/oder Styrol und/oder Vinyltoluol und/oder Inden und/oder Cumaron und/oder Methylinden und/oder Methylcumaron und/oder Phenol handeln.
Gemäß Römpp Online Lexikon, Version 3.36 ist der Begriff "Olefine" die "Gruppenbezeichnung für acyclische und cyclische aliphatische Kohlenwasserstoffe mit einer oder mehreren re-aktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.
Bei den Alkenen kann es sich beispielsweise um 1-Buten und/oder 2-Buten und/oder Butadien handeln.

In einer bevorzugten Ausführungsform der Erfindung ist das Kohlenwasserstoffharz ausgewählt aus der Gruppe bestehend aus aliphatischen C₅-Harzen und/oder Kohlenwasserstoffharzen aus alpha-Methylstyrol und Styrol.

In einer bevorzugten Ausführungsform der Erfindung ist das Kohlenwasserstoffharz ein Kohlenwasserstoffharz aus alpha-Methylstyrol und Styrol (auch als AMS-Harz abgekürzt).

Das in der erfindungsgemäßen Kautschukmischung enthaltene Kohlenwasserstoffharz, weist bevorzugt einen Erweichungspunkt gemäß ASTM E 28 (Ring und Ball) von 60 bis 200 °C, bevorzugt 60 bis 150 °C, besonders bevorzugt 60 bis 120 °C, ganz besonders bevorzugt 60 bis 99 °C, und wiederum ganz besonders bevorzugt 80 bis 99 °C auf.
Ein geeignetes alpha-Methylstyrol-Styrol-Harz ist beispielsweise unter dem Handelsnamen SYLVATRAXX™ 4401 der Firma Arizona Chemical Company, LLC erhältlich.

Mit einem alpha-Methylstyrol-Styrol-Harz mit einem Erweichungspunkt gemäß ASTM E 28 (Ring und Ball) von 60 bis 150 °C, bevorzugt 80 bis 90 °C, ergibt sich insbesondere in Kombination mit den oben genannten Bestandteilen eine besonders gute Prozessierbarkeit der Kautschukmischung, insbesondere hinsichtlich der Extrudate vor der Vernetzung, bei gleichzeitig guten Rollwiderstandsindikatoren und gutem (und damit geringem) Wärmeaufbau und optimalem Nassbrems- und Abriebverhalten.

Insbesondere ergibt sich bei der Kombination von mehr als 25 phr wenigstens eines alpha-Methylstyrol-Styrol-Harzes mit einem Erweichungspunkt von 60 bis 150 °C, bevorzugt von 80 bis 90 °C, in Kombination mit einer Gesamtglasübergangstemperatur der enthaltenen festen Kautschuke (oder des enthaltenen festen Kautschuks) von niedriger als - 40 °C eine Verbesserung im Abriebverhalten ohne dass das Rollwiderstands- und Nassbremsverhalten negativ beeinträchtigt wird.

Bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.
Die erfindungsgemäße Kautschukmischung kann somit zusätzlich zu den genannten bevorzugten Harzen wenigstens ein Klebharz enthalten, wobei sich die angegebenen Mengen in dem Fall auf die Gesamtmenge an enthaltenen Harzen beziehen.

Die erfindungsgemäße Kautschukmischung kann 0 bis 150 phr wenigstens eines weiteren Weichmachers enthalten. Gemäß einer bevorzugten Ausführungsform enthält die erfindungsgemäße Kautschukmischung wenigstens einen Weichmacher, wobei die Gesamtmenge an Weichmacher bevorzugt 0,1 bis 150 phr, beträgt.
Zu den im Rahmen der vorliegenden Erfindung verwendeten weiteren Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse. Der Weichmacher ist bevorzugt ausgewählt aus der Gruppe bestehend aus den oben genannten Weichmachern. Mineralöle sind als weitere Weichmacheröle besonders bevorzugt. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N, N'- bis-(1,4- Dimethylpentyl)-p-Phenylenediamin (77PD)
b) Aktivatoren, wie z. B. Zinkoxid und Fettsäuren (z. B. Stearinsäure),
c) Wachse,
d) Mastikationshilfsmittel, wie z. B. 2,2'-Dibenzamidodiphenyldisulfid (DBD und
e) Verarbeitungshilfsmittel, wie z. B. Fettsäuresalze, wie z. B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich noch 0,1 bis10 phr, bevorzugt 0,2 bis 8 phr, besonders bevorzugt 0,2 bis 4 phr, Zinkoxid (ZnO).

Hierbei kann es sich um alle dem Fachmann bekannten Typen an Zinkoxid handeln, wie z. B. ZnO-Granulat oder -Pulver. Das herkömmlicherweise verwendete Zinkoxid weist in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation wird ggf. in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können.

Schwefel und/oder weitere Schwefelspender sowie ein oder mehrere Beschleuniger werden im letzten Mischungsschritt der Kautschukmischung zugesetzt.

Gemäß einer bevorzugten Ausführungsform der Erfindung enthält die Kautschukmischung ein Vulkanisationssystem, das wenigstens einen Beschleuniger und elementaren Schwefel und/oder wenigstens eine schwefelspendende Substanz enthält.

Die Vulkanisation der erfindungsgemäßen schwefelvernetzbaren Kautschukmischung wird somit in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können.
Es kann auch ein Gemisch mehrerer Beschleuniger verwendet werden.

Besonders bevorzugt enthält die erfindungsgemäße Kautschukmischung ein Vulkanisationssystem, das wenigstens einen Beschleuniger und elementaren Schwefel und wenigstens eine schwefelspendende Substanz enthält. Hiermit werden besonders gute Abriebeigenschaften erzielt, d. h. insbesondere eine hohe Abriebresistenz.

Der Beschleuniger ist bevorzugt ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Guanidinbeschleunigern und/oder Xanthogenatbeschleunigern.
Besonders bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Ein bevorzugter Thiazolbeschleuniger ist beispielsweise MBT (2-Mercaptobenzothiazol). Ein bevorzugter Guanidinbeschleuniger ist beispielsweise DPG (Diphenylguanidin). Gemäß einer bevorzugten Ausführungsform der Erfindung enthält die schwefelvernetzbare Kautschukmischung wenigstens N-tert.Butyl-2-benzothiazylsulfenamid (TBBS) als Beschleuniger.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden.

Schwefelspendende Substanzen, enthaltend Vernetzungsmittel, die Schwefel an das Netzwerk abgeben, sind der fachkundigen Person bekannt oder z. B. in Hofmann & Gupta: Handbuch der Kautschuktechnologie, Gupta-Verlag (2001), Kapitel 7, beschrieben. Schwefelspendende Substanzen werden auch als Schwefeldonoren oder Schwefelspender bezeichnet.
Es kann auch ein Gemisch mehrerer schwefelspendender Substanzen eingesetzt werden.

Die schwefelspendende Substanz ist dabei bevorzugt ausgewählt aus der Gruppe enthaltend, besonders bevorzugt bestehend aus, Thiuramdisulfiden und/oder Thiuramtetrasulfiden und/oder Dithiophosphaten und/oder 1,6-Bis(N,N-dibenzylthiocarbamoyldithio)hexan und/oder Diarylpolysulfiden und/oder Dialkylpolysulfiden.

Die schwefelspendende Substanz ist dabei besonders bevorzugt ausgewählt aus der Gruppe enthaltend, besonders bevorzugt bestehend aus, Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Gemäß einer besonders bevorzugten Ausführungsform der Erfindung ist die schwefelspendende Substanz ausgewählt aus der Gruppe bestehend aus Thiuramdisulfiden, wie Tetrabenzylthiuramdisulfid (TBzTD) und/oder Tetramethylthiuramdisulfid (TMTD) und/oder Tetraethylthiuramdisulfid (TETD), und/oder Thiuramtetrasulfiden, wie Dipentamethylenthiuramtetrasulfid (DPTT), und/oder Dithiophosphaten, wie DipDis (Bis-(Diisopropyl)thiophosphoryldisulfid) und/oder Bis(O,O-2-ethylhexyl-thiophosphoryl)Polysulfid und/oder Zinkdichloryldithiophosphat und/oder Zinkalkyldithiophosphat, und/oder 1,6-Bis(N,N-dibenzylthiocarbamoyldithio)hexan und/oder Diarylpolysulfiden und/oder Dialkylpolysulfiden.

Die schwefelspendende Substanz kann demnach auch ein schwefelspendender Beschleuniger (wie TBzTD) sein.
Es ist dem Fachmann bekannt, dass z.B. TBzTD zwei Schwefelatome pro Molekül abgibt, die an der Vulkanisation teilnehmen. Mit TBzTD als schwefelspendendem Beschleuniger ist es in einer schwefelarmen Kautschukmischung (geringe Mengen, < 1,3 phr, an zugesetzten elementarem/freiem Schwefel) oder in einer Kautschukmischung ohne zugesetzten freien Schwefel möglich ein überwiegend monosulfidisches Netzwerk, also ein effizientes Netzwerk bei der Vulkanisation einzustellen.

Gemäß einer bevorzugten Ausführungsform der Erfindung enthält die schwefelvernetzbare Kautschukmischung wenigstens TBzTD.

Gemäß einer bevorzugten Ausführungsform der Erfindung enthält die schwefelvernetzbare Kautschukmischung eine Kombination von wenigstens einem Sulfenamidbeschleuniger, besonders bevorzugt N-tert.Butyl-2-benzothiazylsulfenamid (TBBS), und wenigstens einer schwefelspendenden Substanz, besonders bevorzugt TBzTD.
Die Vulkanisation wird daher gemäß einer besonders bevorzugten Ausführungsform in Anwesenheit von vergleichsweise geringen Mengen an elementarem Schwefel in Kombination mit Tetrabenzylthiuramdisulfid (TBzTD) als Schwefelspender mit Hilfe von wenigstens N-tert.Butyl-2-benzothiazylsulfenamid (TBBS) als Vulkanisationsbeschleuniger durchgeführt. Hierdurch ergibt sich eine weitere Verbesserung der Abriebresistenz der erfindungsgemäßen Kautschukmischung.

Die Menge an zugegebenem freiem (elementarem) Schwefel beträgt bevorzugt 0,1 bis 1,3 phr, besonders bevorzugt 0,3 bis 1 phr.
Die Menge der wenigstens einen schwefelspendenden Substanz, bevorzugt TBzTD, beträgt bevorzugt 1,0 bis 5 phr, besonders bevorzugt 1,0 bis 3 phr.
Die Menge des wenigstens einen Beschleunigers, bevorzugt wenigstens eines Sulfenamidbeschleunigers, besonders bevorzugt TBBS, beträgt bevorzugt 1,0 bis 5 phr, besonders bevorzugt 1,0 bis 4 phr.

Wenn die Kautschukmischung eines oder mehrere sulfidische Silane enthält, so können auch diese Schwefelatome abgeben, je nachdem, wie viele Schwefelatome aneinander gebunden in dem Molekül enthalten sind. So ist das disulfidische Silane TESPD (3,3'-Bis(triethoxysilylpropyl)disulfid) im Rahmen der Erfindung kein schwefelspendendes Silan.
Das tetrasulfidische Silan TESPT (3,3'-Bis(triethoxysilylpropyl)tetrasulfid) gibt, wie dem Fachmann bekannt, zwei Schwefelatome ab und wird als schwefelspendendes Silan klassifiziert.

Schwefelspendende Silane zählen im Rahmen der vorliegenden Erfindung jedoch nicht zu den erfindungsgemäß enthaltenen "schwefelspendenden Substanzen".
Es können zusätzlich zu dem Vulkanisationssystem aus Schwefel, Beschleuniger und schwefelspendender Substanz eines oder mehrere schwefelspendende Silane, wie beispielsweise das oben beschriebene Gemisch aus S₂- und Silanen mit einer größeren Zahl an Schwefelatomen, in der erfindungsgemäßen Kautschukmischung enthalten sein.

Außerdem können in der Kautschukmischung Vulkanisationsverzögerer vorhanden sein.

Die Herstellung der Kautschukmischung erfolgt ansonsten nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht.

Ein weiterer Gegenstand der vorliegenden Erfindung ist ein Vulkanisat, welches durch Schwefelvulkanisation wenigstens einer erfindungsgemäßen Kautschukmischung enthaltend die oben genannten Bestandteile erhalten wird. Bei diesem Erfindungsgegenstand handelt es sich somit um die vulkanisierte Kautschukmischung.

Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Bei zweigeteilten Laufstreifen kann die erfindungsgemäße Kautschukmischung sowohl für die Cap als auch für die Base verwendet werden, bevorzugt wenigstens für die Cap.
Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.

Die Erfindung soll nun anhand von Vergleichs- und Ausführungsbeispielen, die in Tabelle 1 zusammengefasst sind, näher erläutert werden.
"Raumtemperatur" (RT) wie hier verwendet bezeichnet eine Temperatur von etwa 20-25°C oder, bei Messung eines speziellen Parameters, von 20°C.

Die mit "E" gekennzeichneten Mischungen sind hierbei erfindungsgemäße Mischungen, während es sich bei den mit "V" gekennzeichneten Mischungen um Vergleichsmischungen handelt. Die Mischungsherstellung erfolgte unter üblichen Bedingungen in drei Stufen in einem Labortangentialmischer.
Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Mooney-Viskosität (ML1+3), gemäß ASTM D1646 (Mooney-Einheiten abgekürzt M.E.)
- Shore-A-Härte (Einheit Shore A, abgekürzt ShA) bei Raumtemperatur (RT) und bei 70 °C gemäß DIN 53 505
- Rückprallelastizität (Rückprall) bei Raumtemperatur (RT) und 70°C gem. DIN 53 512
- Spannungswerte bei 50%, 100%, 200%, 300 % Dehnung (Modul 50, Modul 100, Modul 200 bzw. Modul 300) bei Raumtemperatur (RT) gemäß DIN 53 504
- Zugfestigkeit und Bruchdehnung bei Raumtemperatur gemäß DIN 53 504

### Verwendete Substanzen:

a) Polymer A: modifiziertes Polybutadien gemäß Formel III), erhalten durch Reaktion von 3-Isocyant-n-Propyl-Triethoxysilan mit endständig Hydroxy-funktionalisiertem Polybutadien (z.B. Krasol LBH-P3000) wie in der US 2002/0082333 A1 beschrieben, Mw = 500 bis 7800 g/mol
b) Polymer B: L-BR302, Fa. Kuraray, unmodifiziertes Polybutadien, Mw = 5500 g/mol,
c) Kieselsäure Z1165 MP, Fa. Solvay
d) Geblocktes Mercaptosilan: NXT, 3-(Octanoylthio)-1-Propyl-Triethoxysilan, Fa. Momentive
e) alpha-Methylstyrol-Styrol-Harz, SYLVATRAXX™ 440, Fa. Arizona Chemical Company, LLC, Erweichungspunkt 80 bis 90 °C
f) Sonstige Zusatzstoffe: Alterungsschutzmittel, Ozonschutzwachs, Zinkoxid, Stearinsäure, Prozesshilfsmittel
g) Feste Dienkautschuke: 10 phr Naturkautschuk, 20 phr Butadienkautschuk, 70 phr Styrol-Butadien-Kautschuk

Wie aus Tabelle 1 hervorgeht, zeigt die erfindungsgemäße Kautschukmischung E1 mit der Kombination aus Polymer A und Polymer B eine überraschend niedrige Viskosität und damit eine überraschend gute Extrudierbarkeit. Dies wäre anhand der Einzelmaßnahmen (nur Polymer B in V2 und nur Polymer A in V3) nicht zu erwarten gewesen, da mit dem Polymer A die Viskosität stark ansteigt.
Die erfindungsgemäße Kautschukmischung E1 zeigt dabei im Vergleich zu den Mischungen V1 bis V3 ein vergleichbares Eigenschaftsbild hinsichtlich der sonstigen physikalischen Eigenschaften. Somit ist es mit der erfindungsgemäßen Kautschukmischung möglich, ein optimales Eigenschaftsbild, insbesondere durch Verwendung eines organosilicium modifizierten Polymers A, zu erzielen, ohne das Schwierigkeiten bei der Herstellung, insbesondere der Extrusion in Kauf genommen werden müssen. Die genannten Vorteile gelten gleichermaßen für einen erfindungsgemäßen Fahrzeugreifen, der die erfindungsgemäße Kautschukmischung in wenigstens einem Bauteil, bevorzugt wenigstens im Laufstreifen oder der Cap des Laufstreifens, aufweist.

**Tabelle 1**

| **Bestandteile** | **Einh.** | **V1** | **V2** | **V3** | **E1** |
|---|---|---|---|---|---|
| NR / BR / SSBR ^{g)} | phr | 100 | 100 | 100 | 100 |
| Polymer A ^{a)} | phr | - | - | 10 | 10 |
| Polymer B ^{b)} | phr | - | 10 | - | 10 |
| Ruß N339 | phr | 4,7 | 4,7 | 4,7 | 4,7 |
| Kieselsäure ^{c)} | phr | 125 | 125 | 125 | 125 |
| Silan ^{d)} | phr | 13,8 | 13,8 | 13,8 | 13,8 |
| Harz ^{e)} | phr | 39 | 39 | 39 | 39 |
| Sonst. Zusatzstoffe ^{f)} | phr | 17 | 17 | 17 | 17 |
| TBzTD | phr | 1,8 | 1,8 | 1,8 | 1,8 |
| TBBS | phr | 2 | 2 | 2 | 2 |
| Schwefel | phr | 0,8 | 0,8 | 0,8 | 0,8 |

| **Physikalische Eigenschaften** | | | | | |
|---|---|---|---|---|---|
| Viskosität | M. E. | 95 | 86 | 104 | 84 |
| Härte RT | Shore A | 72 | 68 | 71 | 67 |
| Härte 70 °C | Shore A | 66 | 62 | 67 | 63 |
| Rückpr. RT | % | 23 | 24 | 27 | 28 |
| Rückpr. 70 °C | % | 47 | 49 | 50 | 51 |
| Diff. Rückpr. | | 24 | 25 | 23 | 23 |
| Modul 50 | MPa | 1,9 | 1,7 | 2,7 | 1,7 |
| Modul 100 | MPa | 3,4 | 2,9 | 3,6 | 2,9 |
| Modul 200 | MPa | 8,1 | 6,8 | 8,5 | 7 |
| Zugfestigkeit | MPa | 18 | 19 | 17 | 17 |
| Bruchdehnung | % | 406 | 471 | 378 | 408 |

## Patentansprüche

1. Schwefelvernetzbare Kautschukmischung, **dadurch gekennzeichnet, dass** sie wenigstens die folgenden Bestandteile enthält:
- 100 phr wenigstens eines festen Kautschuks, welcher ein Gewichtsmittel Mw des Molekulargewichts gemäß GPC von 250.000 bis 5.000.000 g/mol aufweist und
- 3 bis 40 phr wenigstens eines flüssigen Polymers A, welches endständig organosilicium-modifiziert ist, und ein Gewichtsmittel Mw des Molekulargewichts gemäß GPC von 500 bis 7800 g/mol aufweist, und
- 3 bis 40 phr wenigstens eines unmodifizierten flüssigen Polymers B, welches ein Gewichtsmittel Mw des Molekulargewichts gemäß GPC von 500 bis 50.000 g/mol aufweist, und
- wenigstens eine Kieselsäure.

2. Kautschukmischung nach Anspruch 1, **dadurch gekennzeichnet, dass** das flüssige Polymer A mit zumindest einem Rest gemäß Formel I) modifiziert ist:
I) (R¹R²R³)Si-
wobei R¹, R², R³ in den Strukturen gleich oder verschieden sein können und ausgewählt sein können aus linearen oder verzweigten Alkoxy-, Cycloalkoxy,- Alkyl-, Cycloalkyl- oder Arylgruppen mit 1 bis 20 Kohlenstoffatomen, und wobei der Rest gemäß Formel I) direkt oder über eine Brücke an die Polymerkette des Polymers angebunden ist und wobei die Brücke aus einer gesättigten oder ungesättigten Kohlenstoffkette besteht, die auch cyclische und/oder aliphatische und/oder aromatische Elemente sowie in oder an der Kette Heteroatome enthalten kann.

3. Kautschukmischung nach Anspruch 2, **dadurch gekennzeichnet, dass** der Rest gemäß Formel I) nicht direkt, sondern über eine Brücke gemäß Formel II) angebunden ist:
II) (R¹R²R³)Si-Y-X-,
wobei in Formel II) Y eine Alkylkette (-CH₂)ₙ- mit n = 1 bis 8 ist und X eine funktionelle Gruppe, die ausgewählt ist aus der Gruppe bestehend aus Ester, Ether, Urethan, Harnstoff, Amin, Amid, Thioether, Thioester, ist.

4. Kautschukmischung nach einem der vorherigen Ansprüche, **dadurch gekennzeichnet, dass** das modifizierte Polymer A ein Polybutadien ist.

5. Kautschukmischung nach Anspruch 4, **dadurch gekennzeichnet, dass** das organosilicium-modifizierte flüssige Polybutadien eine Struktur gemäß Formel III) aufweist:

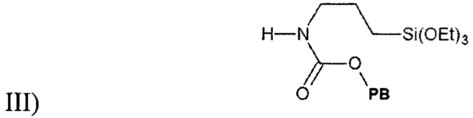

6. Kautschukmischung nach einem der vorherigen Ansprüche, **dadurch gekennzeichnet, dass** das unmodifizierte Polymer B ein Polybutadien ist.

7. Kautschukmischung nach einem der vorherigen Ansprüche, **dadurch gekennzeichnet, dass** der wenigstens eine feste Kautschuk wenigstens einen Dienkautschuk umfasst, welcher ausgewählt ist aus der Gruppe bestehend aus synthetischem Polyisopren (IR) und natürlichem Polyisopren (NR) und Styrol-Butadien-Kautschuk (SBR) und Polybutadien (BR).

8. Kautschukmischung nach einem der vorherigen Ansprüche, **dadurch gekennzeichnet, dass** sie mehr als 25 phr wenigstens eines Kohlenwasserstoffharzes enthält.

9. Kautschukmischung nach einem der vorherigen Ansprüche, **dadurch gekennzeichnet, dass** die Gesamtglasübergangstemperatur des oder der enthaltenen festen Kautschuke niedriger als -40 °C ist.

10. Kautschukmischung nach einem der vorherigen Ansprüche, **dadurch gekennzeichnet, dass** sie ein Vulkanisationssystem enthält, welches wenigstens einen Beschleuniger und elementaren Schwefel und wenigstens eine schwefelspendende Substanz enthält.

11. Kautschukmischung nach einem der vorherigen Ansprüche, , **dadurch gekennzeichnet, dass** sie wenigstens ein geblocktes Mercaptosilan enthält.

12. Vulkanisat, welches durch Schwefelvulkanisation wenigstens einer Kautschukmischung nach einem der Ansprüche 1 bis 11 erhalten wird.

13. Fahrzeugreifen, **dadurch gekennzeichnet, dass** er in wenigstens einem Bauteil wenigstens ein Vulkanisat wenigstens einer Kautschukmischung nach Anspruch 12 enthält.

14. Fahrzeugreifen nach Anspruch 13, **dadurch gekennzeichnet, dass** er die Kautschukmischung wenigstens im Laufstreifen enthält.

## Claims

1. Sulfur-crosslinkable rubber mixture, **characterized in that** it comprises at least the following constituents:
- 100 phr of at least one solid rubber having a weight-average molecular weight Mw by GPC of 250 000 to 5 000 000 g/mol and
- 3 to 40 phr of at least one liquid polymer A which is terminally organosilicon-modified and has a weight-average molecular weight Mw by GPC of 500 to 7800 g/mol, and
- 3 to 40 phr of at least one unmodified liquid polymer B having a weight-average molecular weight Mw by GPC of 500 to 50 000 g/mol, and
- at least one silica.

2. Rubber mixture according to Claim 1, **characterized in that** the liquid polymer A has been modified with at least one radical of formula I):
I) (R¹R²R³)Si-
where R¹, R², R³ in the structures may be the same or different and may be selected from linear or branched alkoxy, cycloalkoxy, alkyl, cycloalkyl or aryl groups having 1 to 20 carbon atoms, and where the radical of formula I) is attached to the polymer chain of the polymer directly or via a bridge and where the bridge consists of a saturated or unsaturated carbon chain which may also contain cyclic and/or aliphatic and/or aromatic elements and heteroatoms in or on the carbon chain.

3. Rubber mixture according to Claim 2, **characterized in that** the radical of formula I) is attached not directly but via a bridge of formula II)
II) (R¹R²R³) Si-Y-X-
where, in formula II), Y is an alkyl chain (-CH₂)ₙ- with n = 1 to 8 and X is a functional group selected from the group consisting of ester, ether, urethane, urea, amine, amide, thioether, thioester.

4. Rubber mixture according to any of the preceding claims, **characterized in that** the modified polymer A is a polybutadiene.

5. Rubber mixture according to Claim 4, **characterized in that** the organosilicon-modified liquid polybutadiene has a structure of formula III):

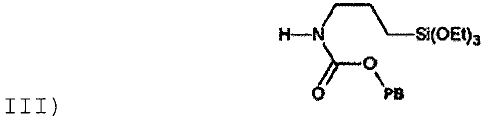

6. Rubber mixture according to any of the preceding claims, **characterized in that** the unmodified polymer B is a polybutadiene.

7. Rubber mixture according to any of the preceding claims, **characterized in that** the at least one solid rubber comprises at least one diene rubber selected from the group consisting of synthetic polyisoprene (IR) and natural polyisoprene (NR) and styrenebutadiene rubber (SBR) and polybutadiene (BR).

8. Rubber mixture according to any of the preceding claims, **characterized in that** it contains at least 25 phr of at least one hydrocarbon resin.

9. Rubber mixture according to any of the preceding claims, **characterized in that** the overall glass transition temperature of the solid rubber(s) present is less than -40°C.

10. Rubber mixture according to any of the preceding claims, **characterized in that** it comprises a vulcanization system comprising at least one accelerator and elemental sulfur and at least one sulfur donor substance.

11. Rubber mixture according to any of the preceding claims, **characterized in that** it comprises at least one blocked mercaptosilane.

12. Vulcanizate obtained by sulfur vulcanization of at least one rubber mixture according to any of Claims 1 to 11.

13. Vehicle tyre, **characterized in that** one vulcanizate of at least it comprises at least one rubber mixture according to Claim 12 is at least one component.

14. Vehicle tyre according to Claim 13, **characterized in that** it contains the rubber mixture at least in the tread.

## Revendications

1. Mélange de caoutchouc réticulable au soufre, **caractérisé en ce qu'**il contient au moins les constituants suivants :
- 100 pce d'au moins un caoutchouc solide, qui présente une moyenne en poids Mw du poids moléculaire selon CPG de 250 000 à 5 000 000 g/mol et
- 3 à 40 pce d'au moins un polymère liquide A, qui est modifié aux extrémités par de l'organosilicium, et présente une moyenne en poids Mw du poids moléculaire selon CPG de 500 à 7 800 g/mol, et
- 3 à 40 pce d'au moins un polymère liquide non modifié B, qui présente une moyenne en poids Mw du poids moléculaire selon CPG de 500 à 50 000 g/mol, et
- au moins une silice.

2. Mélange de caoutchouc selon la revendication 1, **caractérisé en ce que** le polymère liquide A est modifié avec au moins un radical selon la formule I) :
I) (R¹R²R³)Si-
R¹, R², R³ pouvant être identiques ou différents dans les structures, et pouvant être choisis parmi les groupes alcoxy, cycloalcoxy, alkyle, cycloalkyle ou aryle linéaires ou ramifiés de 1 à 20 atomes de carbone, et le radical selon la formule I) étant relié directement ou par un pont à la chaîne polymère du polymère, et le pont étant constitué par une chaîne carbonée saturée ou insaturée, qui peut également contenir des éléments cycliques et/ou aliphatiques et/ou aromatiques, ainsi que des hétéroatomes dans ou sur la chaîne carbonée.

3. Mélange de caoutchouc selon la revendication 2, **caractérisé en ce que** le radical selon la formule I) n'est pas relié directement, mais plutôt par un pont selon la formule II) :
II) (R¹R²R³)Si-Y-X-,
dans la formule II), Y étant une chaîne alkyle (-CH₂)ₙ- avec n = 1 à 8 et X étant un groupe fonctionnel, qui est choisi dans le groupe constitué par ester, éther, uréthane, urée, amine, amide, thioéther, thioester.

4. Mélange de caoutchouc selon l'une quelconque des revendications précédentes, **caractérisé en ce que** le polymère modifié A est un polybutadiène.

5. Mélange de caoutchouc selon la revendication 4, **caractérisé en ce que** le polybutadiène liquide modifié par de l'organosilicium présente une structure selon la formule III) :

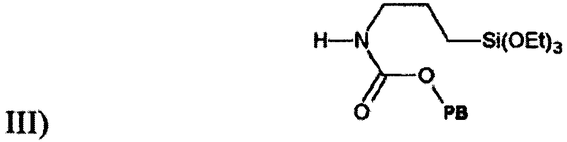

6. Mélange de caoutchouc selon l'une quelconque des revendications précédentes, **caractérisé en ce que** le polymère non modifié B est un polybutadiène.

7. Mélange de caoutchouc selon l'une quelconque des revendications précédentes, **caractérisé en ce que** ledit au moins un caoutchouc solide comprend au moins un caoutchouc diénique, qui est choisi dans le groupe constitué par le polyisoprène synthétique (IR) et le polyisoprène naturel (NR) et le caoutchouc de styrène-butadiène (SBR) et le polybutadiène (NR).

8. Mélange de caoutchouc selon l'une quelconque des revendications précédentes, **caractérisé en ce qu'**il contient plus de 25 pce d'au moins une résine hydrocarbonée.

9. Mélange de caoutchouc selon l'une quelconque des revendications précédentes, **caractérisé en ce que** la température de transition vitreuse du ou des caoutchoucs solides contenus est inférieure à -40 °C.

10. Mélange de caoutchouc selon l'une quelconque des revendications précédentes, **caractérisé en ce qu'**il contient un système de vulcanisation, qui contient au moins un accélérateur et du soufre élémentaire et au moins une substance donneuse de soufre.

11. Mélange de caoutchouc selon l'une quelconque des revendications précédentes, **caractérisé en ce qu'**il contient au moins un mercaptosilane bloqué.

12. Vulcanisat, qui est obtenu par vulcanisation au soufre d'au moins un mélange de caoutchouc selon l'une quelconque des revendications 1 à 11.

13. Pneu de véhicule, **caractérisé en ce qu'**il contient dans au moins un composant au moins un vulcanisat d'au moins un mélange de caoutchouc selon la revendication 12.

14. Pneu de véhicule selon la revendication 13, **caractérisé en ce qu'**il contient le mélange de caoutchouc au moins dans la bande de roulement.
